# FASCICULE DE BREVET EUROPEEN

(11) **EP 3 856 518 B1**
(45) Date de publication et mention de la délivrance du brevet: **07.06.2023**
(21) Numéro de dépôt: 19773121.9
(22) Date de dépôt: 26.09.2019
(51) Int. Cl.: B32B 37/14, C03C 17/34, C03C 17/38, C03C 17/42, B60J 1/00, B32B 17/10, B32B 37/26

(54) **PROCEDE D'OBTENTION D'UN MATERIAU COMPRENANT UNE FEUILLE DE VERRE**
VERFAHREN ZUR HERSTELLUNG EINES MATERIALS MIT EINER GLASPLATTE
METHOD FOR OBTAINING A MATERIAL COMPRISING A GLASS SHEET

(30) Priorité: 27.09.2018 FR 1858861
(43) Date de publication de la demande: 04.08.2021
(73) Titulaire: Saint-Gobain Glass France, 92400 Courbevoie (FR)
(72) Inventeur: JAMART, Juliette, 60200 COMPIEGNE (FR); LALANDE, Charline, 60200 COMPIEGNE (FR); LALLEMENT, Marion, 60280 MARGNY LES COMPIEGNE (FR); QUEVAL, Willy, 60157 ELINCOURT SAINTE MARGUERITE (FR); DUMOTIER, Leila, 60280 MARGNY LES COMPIEGNE (FR)
(74) Mandataire: Saint-Gobain Recherche
(86) Numéro de dépôt international: PCT/EP2019/076056
(87) Numéro de publication internationale: WO 2020/064940

(56) Documents cités:
- EP-A1- 3 034 296
- EP-A1- 3 034 296
- WO-A1-2015/185848
- WO-A1-2015/185848

## Description

L'invention se rapporte au domaine des matériaux comprenant une feuille de verre, en particulier des vitrages. Elle concerne plus particulièrement un procédé mettant en oeuvre un traitement thermique à haute température, par exemple un traitement de bombage et/ou de trempe et permettant d'obtenir des produits de meilleure qualité en termes de propriétés optiques. On connaît de la demande EP3034296A1 un procédé d'obtention d'un matériau comprenant une feuille de verre.

Les feuilles de verre utilisées dans la fabrication de vitrages pour bâtiments ou véhicules de transport sont fréquemment fonctionnalisées par l'ajout de revêtements, notamment de revêtements minéraux. Il peut par exemple s'agir de revêtements destinés à améliorer les propriétés thermiques du vitrage final, par exemple des revêtements électro-conducteurs, à faible émissivité, lesquels vont améliorer l'isolation thermique en réfléchissant le rayonnement infrarouge et évitant les déperditions de chaleur depuis le bâtiment ou le véhicule, ou encore des revêtements de contrôle solaire, qui vont absorber et/ou réfléchir une partie du rayonnement solaire et ainsi éviter l'échauffement à l'intérieur du bâtiment ou du véhicule. Il peut aussi s'agir de revêtements ayant une fonction esthétique, tels que des revêtements d'émail, lesquels permettent par exemple de dissimuler des joints de montage du vitrage dans une baie de carrosserie d'un véhicule et également de les protéger contre le rayonnement ultraviolet. Il peut encore s'agir de revêtements ayant une fonction de conduction électrique, par exemple des revêtements sous forme de fils servant à chauffer par effet Joule des lunettes arrière de véhicules automobiles.

La fabrication des vitrages met fréquemment en oeuvre des traitements thermiques à haute température, au-delà de 550°C, notamment des traitements de bombage et/ou de trempe, destinés à renforcer mécaniquement le vitrage ou à lui conférer la forme désirée. Ces traitements sont mis en oeuvre dans des dispositifs de chauffage tels que des fours, dans lesquels les feuilles de verre sont chauffées par convection et rayonnement.

Les inventeurs ont pu mettre en évidence que des défauts optiques pouvaient apparaître dans certaines conditions, lorsque les feuilles de verre sont revêtues de manière différente selon les zones. Les inventeurs ont pu constater que ces défauts optiques provenaient du fait que les températures subies par la feuille de verre dans les différentes zones pouvaient différer de plusieurs dizaines de degrés. Les zones recouvertes par un revêtement à faible émissivité, qui réfléchissent le rayonnement infrarouge, ont tendance à moins chauffer que les zones de plus grande émissivité, et l'écart peut encore être aggravé par la présence dans certaines zones du vitrage de revêtements absorbant le rayonnement infrarouge, par exemple des revêtements d'émail opaques. La présence superposée, dans certaines zones, de revêtements réfléchissant le rayonnement infrarouge et de revêtements absorbant l'infrarouge s'est également révélée problématique. De même, les zones recouvertes par un revêtement absorbant le rayonnement infrarouge, par exemple des revêtements d'émail opaques, ont tendance à subir des températures plus élevées que les zones non revêtues.

L'invention a pour but d'obvier à ces inconvénients. A cet effet, l'invention a pour objet un procédé d'obtention d'un matériau comprenant une feuille de verre, ledit procédé comprenant les étapes suivantes :
- la fourniture d'une feuille de verre comprenant une première face revêtue au moins en partie par un premier revêtement essentiellement minéral, ladite première face possédant au moins une première zone et au moins une deuxième zone, ladite au moins une première zone ayant une émissivité plus élevée que celle de ladite deuxième zone, puis
- l'application, sur au moins une partie de ladite deuxième zone, d'une couche sacrificielle comprenant une résine, puis
- le traitement thermique de ladite feuille de verre revêtue à une température d'au moins 550°C, étape au cours de laquelle ladite couche sacrificielle est éliminée par combustion.

La feuille de verre est de préférence plane avant l'étape de traitement thermique. Le verre est typiquement un verre silico-sodo-calcique, mais d'autres verres, par exemple des borosilicates ou des aluminosilicates peuvent également être employés. La feuille de verre est de préférence obtenue par flottage, c'est-à-dire par un procédé consistant à déverser du verre fondu sur un bain d'étain en fusion.

La feuille de verre peut être claire ou teintée, par exemple en vert, bleu, gris ou bronze. Le choix est fait en fonction de l'utilisation du vitrage final. Dans le cas par exemple d'une lunette arrière de véhicule automobile, la transmission lumineuse du verre est de préférence d'au moins 30% ; la feuille de verre comprend alors de préférence une teneur en oxyde de fer (exprimée sous la forme Fe₂O₃) comprise entre 0,5 et 1,2% en poids. Dans le cas d'un pare-brise de véhicule automobile, la transmission lumineuse du vitrage est normalement d'au moins 70% ; la feuille de verre comprend alors de préférence une teneur en oxyde de fer comprise entre 0,1 et 0,9% en poids.

La feuille de verre présente de préférence une épaisseur comprise dans un domaine allant de 0,7 à 19 mm, notamment de 1 à 10 mm, particulièrement de 2 à 6 mm, voire de 2 à 4 mm. La feuille de verre présente de préférence une surface d'au moins 1 m².

Par « essentiellement minéral », on entend que le revêtement comprend au moins 50% en poids de composés minéraux, de préférence au moins 60%, notamment 70%, voire 80%. Selon un mode de réalisation, le revêtement peut être complètement minéral, éventuellement à l'exception de possibles impuretés organiques. Selon un autre mode de réalisation, le revêtement comprend des composés organiques, par exemple des solvants ou un médium, qui seront éliminés au plus tard durant l'étape de traitement thermique, éventuellement avant cette dernière, par exemple durant une étape de séchage ou de pré-cuisson.

### Premier aspect de l'invention

Selon un premier aspect de l'invention, le premier revêtement est électro-conducteur. Ce type de revêtement possède intrinsèquement une faible émissivité de nature à perturber le processus de chauffe lors de l'étape de traitement thermique.

Le premier revêtement comprend de préférence au moins un métal, notamment de l'argent, ou comprend au moins un oxyde transparent conducteur.

Dans un premier mode de réalisation préféré du premier aspect de l'invention, le premier revêtement est transparent et recouvre de préférence au moins 80%, voire 90%, de la surface de la feuille de verre. Ce type de revêtement a notamment pour fonction d'améliorer l'isolation thermique du vitrage.

Le premier revêtement comprend alors de préférence au moins une couche d'un oxyde transparent conducteur (TCO). L'oxyde transparent conducteur est de préférence choisi parmi l'oxyde mixte d'étain et d'indium (ITO), les oxydes d'étain dopés, notamment au fluor ou à l'antimoine, les oxydes de zinc dopés, notamment à l'aluminium ou au gallium. Ces oxydes sont à la fois transparents et électro-conducteurs, donc à faible émissivité. La ou chaque couche d'oxyde transparent conducteur est de préférence entourée de couches diélectriques, notamment à base d'oxydes, de nitrures et/ou d'oxynitrures, notamment de silicium, d'étain, de zinc ou de titane. L'épaisseur physique totale en oxyde transparent conducteur est de préférence comprise entre 30 et 200 nm, notamment entre 40 et 150 nm.

Alternativement, le premier revêtement peut comprendre au moins une couche mince d'argent, la ou chaque couche mince d'argent étant entourée de couches diélectriques.

Dans le cadre de ce mode de réalisation, le premier revêtement est de préférence déposé par pulvérisation cathodique, notamment assistée par champ magnétique, ou par dépôt chimique en phase vapeur (CVD).

Dans un deuxième mode de réalisation préféré du premier aspect de l'invention, le premier revêtement est opaque et recouvre de préférence au plus 20%, notamment entre 1 et 10%, voire entre 1 et 5% de la surface de la feuille de verre. Le premier revêtement est de préférence sous forme de pistes électroconductrices, et sert notamment comme fil chauffant ou fil d'antenne, par exemple sur une lunette arrière de véhicule automobile.

Le premier revêtement comprend dans ce cas de préférence des pistes de pâte d'argent, notamment est constitué de pistes de pâte d'argent. Les pistes sont généralement disposées sous forme de fils traversant la feuille de verre et de bandes collectrices plus larges situées sur les bords de la feuille de verre.

Dans le cadre de ce deuxième mode de réalisation, le premier revêtement est de préférence déposé par sérigraphie d'une composition fluide comprenant des particules métalliques, notamment d'argent, une fritte de verre et un médium organique. Ce dernier est éliminé lors de l'étape de traitement thermique du procédé, laquelle permet de consolider le revêtement. Après ce traitement de cuisson, le revêtement obtenu est essentiellement constitué de particules d'argent liées par un liant vitreux.

La pâte d'argent comprend de préférence, à l'état humide, entre 65 et 75% en poids d'argent. L'épaisseur du revêtement à base de pâte d'argent est de préférence comprise entre 20 et 100 µm à l'état humide, ou entre 10 et 50 µm après cuisson.

Dans le cadre du premier aspect de l'invention, la première face de la feuille de verre est de préférence revêtue sur au moins une partie par un deuxième revêtement essentiellement minéral.

Le deuxième revêtement est avantageusement un émail contenant des pigments, notamment des pigments noirs. Le deuxième revêtement est de préférence opaque.

La présence simultanée sur la même face de la feuille de verre d'un tel revêtement et d'un premier revêtement tel que décrit précédemment aggrave les problèmes précités. L'émail, en particulier opaque, et notamment lorsqu'il est noir, absorbe en effet fortement le rayonnement infrarouge, tandis que le premier revêtement, lorsqu'il est électro-conducteur, le réfléchit. Il en résulte de fortes différences de températures entre d'une part les zones revêtues par le premier revêtement et d'autre part les zones revêtues par le deuxième revêtement, voire le cas échéant les zones recouvertes à la fois par le premier et le deuxième revêtement, ou encore les zones qui ne sont recouvertes par aucun des premier et deuxième revêtements.

Le revêtement d'émail est de préférence déposé par sérigraphie d'une composition d'émail fluide comprenant une fritte de verre, des pigments et un médium organique. Ce dernier est éliminé lors de l'étape de traitement thermique du procédé, laquelle permet de consolider le revêtement d'émail. Après cuisson, le revêtement d'émail comprend donc des pigments dans une matrice vitreuse.

La fritte de verre ou la matrice vitreuse est de préférence à base d'un borosilicate de bismuth et/ou de zinc. Les pigments comprennent de préférence un ou plusieurs oxydes choisis parmi les oxydes de chrome, de cuivre, de fer, de manganèse, de cobalt, de nickel. Il peut s'agir à titre d'exemple de chromates de cuivre et/ou de fer. L'épaisseur du revêtement d'émail, après l'étape de traitement thermique, est de préférence comprise dans un domaine allant de 5 à 50 µm, notamment de 10 à 40 µm.

De préférence, l'un parmi les premier et deuxième revêtements recouvre partiellement l'autre. Plusieurs variantes sont décrites ci-après.

Selon une première variante, le premier revêtement est électro-conducteur et recouvre une partie du deuxième revêtement qui est un émail contenant des pigments. De préférence, le premier revêtement comprend des pistes de pâte d'argent (notamment selon le « deuxième mode » décrit ci-avant). Les caractéristiques préférées mentionnées précédemment pour ces revêtements sont évidemment applicables ici. La face revêtue possède alors une première zone, qui est la zone émaillée non-revêtue par les pistes de pâte d'argent, cette première zone ayant une émissivité plus élevée que celle d'une deuxième zone, qui est la zone revêtue par les pistes de pâte d'argent.

Dans cette variante, il a pu être observé que dans les zones où l'émail est recouvert par la pâte d'argent, la présence de cette dernière diminue fortement l'efficacité de la cuisson de l'émail, de sorte que ce dernier présente une teinte grisâtre après cuisson. Une fragilisation mécanique a également été observée, conduisant dans certains cas à une casse de la feuille de verre durant le refroidissement qui suit le traitement thermique, voire après les opérations de soudure de connecteurs électriques sur la pâte d'argent.

Le matériau obtenu dans cette variante est de préférence intégré à une lunette arrière de véhicule automobile, le premier revêtement étant des pistes de pâtes d'argent comprenant des fils chauffants traversant la feuille de verre et des bandes collectrices situées sur deux côtés opposés de la feuille de verre, les bandes collectrices étant déposées sur un revêtement d'émail (notamment noir) disposé à la périphérie de la feuille de verre. La première face de la feuille de verre est ici destinée, en position d'utilisation, à être en contact avec l'intérieur du véhicule, et la présence d'émail permet notamment de dissimuler les bandes collectrices depuis l'extérieur du véhicule. Le traitement thermique est ici de préférence un traitement de bombage, notamment de bombage-trempe. Dans certains cas la feuille de verre bombée est feuilleté à une deuxième feuille de verre, de sorte que la première face, revêtue des pistes de pâte d'argent, se trouve en contact avec l'intérieur du véhicule (face 4).

Selon une deuxième variante, le deuxième revêtement est un émail contenant des pigments et recouvre partiellement le premier revêtement qui est électro-conducteur. Le premier revêtement comprend de préférence au moins un oxyde transparent conducteur (notamment conformément au « premier mode » décrit précédemment). Les caractéristiques préférées mentionnées précédemment pour ces revêtements sont évidemment applicables ici. La face revêtue possède alors une première zone, qui est la zone émaillée, cette première zone ayant une émissivité plus élevée que celle d'une deuxième zone, qui est la zone revêtue uniquement par le revêtement électro-conducteur.

Le matériau obtenu dans cette variante est de préférence intégré à un toit automobile ou à un pavillon automobile, l'émail étant de préférence un émail noir, disposé à la périphérie de la première face de la feuille de verre, et déposé sur un revêtement électro-conducteur, comprenant un oxyde transparent conducteur, disposé sur la totalité de ladite première face. Dans les zones revêtues uniquement par le premier revêtement, l'efficacité du chauffage est amoindrie par le caractère bas-émissif du premier revêtement, tandis que dans les zones où le premier revêtement est recouvert par l'émail, l'absorption du rayonnement infrarouge par l'émail procure l'effet inverse. Il en résulte un gradient de température très élevé entre les deux zones, engendrant des distorsions optiques, voire dans des cas extrêmes une déformation physique. La première face de la feuille de verre est en position d'utilisation située en contact avec l'intérieur du véhicule automobile.

### Deuxième aspect de l'invention

Selon un deuxième aspect de l'invention, le premier revêtement est un émail contenant des pigments, notamment des pigments noirs. Le premier revêtement est de préférence opaque. Il est de préférence sous forme d'une bande disposée à la périphérie de la feuille de verre. Cette bande recouvre de préférence entre 3 et 20% de la surface de la feuille de verre.

L'émail, en particulier opaque, et notamment lorsqu'il est noir, absorbe en effet fortement le rayonnement infrarouge, plus que le verre nu. Il en résulte de fortes différences de températures entre d'une part les zones revêtues par l'émail (premières zones) et d'autre part les zones de verre non revêtu par l'émail (deuxièmes zones) .

Ces différences peuvent générer des distorsions optiques, parfois appelées « *burn lines* », à proximité de la zone émaillée. Ces distorsions sont particulièrement gênantes lorsqu'elles se situent près des zones, dites « zones caméra », au travers desquelles des capteurs optiques doivent capter la lumière ou des images. C'est le cas par exemple des pare-brise munis de capteurs et/ou de caméras, par exemple des capteurs de pluie ou de luminosité, ou des caméras d'aide à la conduite. Ces capteurs ou caméras sont situés à l'intérieur du véhicule, par exemple dans la zone où le rétroviseur intérieur est fixé au pare-brise. Un revêtement d'émail est généralement disposé dans cette zone afin de dissimuler et protéger l'adhésif servant à fixer le rétroviseur intérieur, mais cette zone émaillée doit ménager une petite fenêtre de transmission non émaillée de façon à ce que la lumière puisse atteindre les capteurs. L'invention permet alors de réduire voire supprimer les distorsions optiques dans les zones caméra.

Le matériau obtenu selon cet aspect de l'invention est de préférence un vitrage feuilleté, notamment pour pare-brise de véhicule automobile, comprenant deux feuilles de verre liées adhésivement au moyen d'un intercalaire thermoplastique, un revêtement d'émail étant déposé sur la face 2 ou sur la face 4 dudit vitrage, en particulier sous la forme d'une bande périphérique comprenant au moins une fenêtre de transmission non émaillée.

Le revêtement d'émail est de préférence déposé par sérigraphie d'une composition d'émail fluide comprenant une fritte de verre, des pigments et un médium organique. Ce dernier est éliminé lors de l'étape de traitement thermique du procédé, qui sera selon les cas un traitement de pré-cuisson ou un traitement de bombage. Après cuisson, le revêtement d'émail comprend donc des pigments dans une matrice vitreuse.

La fritte de verre ou la matrice vitreuse est de préférence à base d'un borosilicate de bismuth et/ou de zinc. Les pigments comprennent de préférence un ou plusieurs oxydes choisis parmi les oxydes de chrome, de cuivre, de fer, de manganèse, de cobalt, de nickel. Il peut s'agir à titre d'exemple de chromates de cuivre et/ou de fer. L'épaisseur du revêtement d'émail, après l'étape de traitement thermique, est de préférence comprise dans un domaine allant de 5 à 50 µm, notamment de 10 à 40 µm.

### Couche sacrificielle

La couche sacrificielle comprend une résine. Les détails donnés ci-après concernant la couche sacrificielle s'appliquent bien évidemment à tous les aspects, modes de réalisation et variantes de l'invention décrits ci-avant.

La teneur en résine dans la couche sacrificielle est notamment d'au moins 10% en poids, ou d'au moins 20%, voire d'au moins 30%. Elle peut être par exemple d'au moins 50% en poids, notamment 60%, voire au moins 70% ou 80%, même encore 90% ou 95%.

La résine peut jouer différents rôles. Elle peut dans certains cas jouer un rôle thermique, sa combustion lors du traitement thermique permettant, par la chaleur dégagée, de compenser les différences d'émissivité des zones de la feuille de verre et donc d'homogénéiser le chauffage. Elle peut, alternativement ou cumulativement, jouer un rôle de liant en fixant temporairement à la surface de la feuille de verre des composés capables d'exercer cette fonction de compensation thermique, soit par leur combustion pendant le traitement thermique, soit par leurs propriétés d'absorption ou de réflexion, notamment du rayonnement infrarouge.

Dans un premier mode de réalisation, la couche sacrificielle est constituée de résine. C'est dans ce cas la combustion de la résine lors du traitement thermique qui va permettre d'homogénéiser le traitement thermique.

Dans un deuxième mode de réalisation, la couche sacrificielle est constituée de résine et de composés minéraux réfractaires ou combustibles. La résine peut dans ce cas servir à fixer temporairement lesdits composés à la surface de la feuille de verre. Par minéraux « combustibles », on entend que ces composés sont capables de brûler lors du traitement thermique. Par « réfractaires », on entend que ces composés ne fondent pas et ne se ramollissent lors du traitement thermique. Dans ce cas, la couche sacrificielle est éliminée par combustion au sens où la résine est éliminée lors du traitement thermique, si bien qu'il n'existe plus de couche sacrificielle proprement dite, mais les composés minéraux réfractaires ou d'éventuels résidus de la combustion des composés minéraux combustibles restent à la surface de la feuille de verre, et peuvent le cas échéant être éliminés par une opération de lavage et/ou de brossage.

Les composés minéraux réfractaires ou combustibles sont avantageusement des pigments (la couche sacrificielle étant alors notamment assimilable à une peinture), particulièrement des pigments absorbant au moins une partie du rayonnement infrarouge, et qui vont donc augmenter l'efficacité du traitement thermique. Dans le cadre de ce mode de réalisation, la couche sacrificielle peut être déposée par sérigraphie d'une composition constituée d'un médium organique (comprenant une résine et des solvants) et de pigments, notamment de pigments noirs.

Les composés minéraux sont notamment le noir de carbone, pigment noir absorbant le rayonnement infrarouge et qui peut brûler lors du traitement thermique, en laissant éventuellement des cendres facilement éliminables.

Dans certains cas, la résine peut être éliminée par un premier traitement thermique à une température d'au moins 550°C en laissant à la surface de la feuille de verre une couche de composés minéraux réfractaires, la feuille de verre étant ensuite soumise à un deuxième traitement thermique à une température d'au moins 550°C, puis à une élimination des composés réfractaires par lavage et/ou brossage. Une telle mise en oeuvre peut se révéler nécessaire lorsque la résine doit impérativement être éliminée avant le traitement thermique final. Par exemple, lorsque le matériau final est un vitrage feuilleté comprenant en face 2 un premier revêtement qui est un émail, ce revêtement se trouve pendant le traitement de bombage en contact avec la face extérieure de la feuille de verre intérieure du vitrage feuilleté. Dans une telle configuration, il est préférable que la combustion de la résine ait lieu lors d'un traitement préalable de pré-cuisson de l'émail. Ne subsiste alors au moment du bombage qu'une couche de composés réfractaires, par exemple des pigments.

Quel que soit le mode de réalisation, différentes résines peuvent être utilisées.

La résine peut notamment être choisie parmi les résines acryliques, les résines époxydes, les résines alkydes, les résines polyuréthane, seules ou en mélange, en phase aqueuse ou solvant. Des copolymères de ces différents polymères sont également utilisables. La résine peut être en phase aqueuse ou solvant, avec un taux d'extrait sec typiquement entre 20 et 80%, notamment entre 30 et 70% en poids.

La résine peut être une résine réticulant sous rayonnement ultraviolet, notamment à base de (méth)acrylates et éventuellement d'un photo-initiateur ; résine sans solvant, ou éventuellement en phase aqueuse ou solvant. La résine peut ne pas être réticulée si la feuille de verre n'a pas besoin d'être manipulée entre l'application de la couche sacrificielle et le traitement thermique. Dans le cas contraire, il est préférable de prévoir une étape de séchage par rayonnement ultraviolet.

La résine peut être un latex, c'est-à-dire sous forme de dispersion ou d'émulsion aqueuse. Le séchage peut avoir lieu à l'air ou au four, mais l'étape de séchage peut être omise si la feuille de verre n'a pas besoin d'être manipulée entre l'application de la couche sacrificielle et le traitement thermique.

La résine peut être une résine thermoplastique, par exemple une résine thermofusible (hot-melt) ou un élastomère thermoplastique, par exemple un copolymère SEBS (polystyrène-b-poly(éthylène-butylène)-b-polystyrène).

La résine peut être la résine d'un médium organique pour composition d'émail.

La couche sacrificielle est de préférence déposée par sérigraphie, impression numérique, au rouleau, au rideau ou par pulvérisation.

La couche sacrificielle est déposée sur au moins une partie de la deuxième zone. Elle peut être déposée sur la totalité de la deuxième zone ou de chaque deuxième zone, voire sur la totalité de la première face. Si la couche sacrificielle n'est pas incompatible avec certaines zones, ce dernier mode de réalisation est préférable d'un point de vue industriel puisqu'il permet un dépôt pleine face par des techniques de rideau ou de rouleau. Dans le cas contraire, ces techniques nécessitent un masquage préalable des zones à ne pas couvrir. Les procédés de sérigraphie, d'impression numérique, ou encore de tampographie, permettent quant à eux de ne déposer la couche sacrificielle que sur des zones déterminées. Ces techniques de dépôt localisé peuvent être utiles par exemple lorsque l'invention a pour but d'éviter les distorsions optiques au niveau d'une zone caméra puisque dans ce cas seule une petite zone de la feuille de verre est concernée par le procédé selon l'invention.

L'épaisseur de la couche sacrificielle est de préférence comprise entre 100 nm et 80 µm, notamment entre 1 µm et 30 µm, voire entre 5 µm et 20 µm.

Le traitement thermique permet d'éliminer la couche sacrificielle par combustion. Comme indiqué précédemment, la résine de la couche sacrificielle est éliminée lors de cette étape, mais des composés réfractaires peuvent rester à la surface de la feuille de verre et être ensuite éliminés par lavage et/ou brossage, éventuellement après un deuxième traitement thermique.

Le traitement thermique est notamment un traitement de bombage et/ou de trempe de la feuille de verre. Le traitement thermique met en oeuvre des températures de préférence comprises entre 600 et 750°C, notamment entre 620 et 700°C. Le traitement de trempe thermique inclut en outre un refroidissement forcé et rapide de la surface du verre, par exemple à l'aide de buses d'air, de manière à créer des contraintes superficielles de compression qui améliorent la résistance mécanique de la feuille de verre.

Lorsqu'un des revêtements est un émail ou est à base de pâte d'argent, la cuisson de l'émail ou de la pâte d'argent a de préférence lieu durant ce traitement thermique.

Lorsqu'un des revêtements est un émail, le traitement thermique, au cours duquel la résine est éliminée par combustion, peut également être un traitement de pré-cuisson dudit émail. Le traitement thermique met alors en oeuvre des températures de préférence comprises entre 550 et 650°C, notamment entre 560 et 600°C. Le traitement de pré-cuisson est en particulier utile pour développer les propriétés anti-adhésion de certains émaux. Dans ce cas, le traitement thermique est de préférence suivi d'un traitement de bombage de la feuille de verre. Comme indiqué précédemment, ce mode de réalisation est particulièrement appréciable lorsque le premier revêtement est un émail destiné à être en face 2 d'un vitrage feuilleté, ledit émail se trouvant en contact avec l'autre feuille de verre du vitrage feuilleté pendant le traitement de bombage. Dans un tel cas, la couche sacrificielle comprend avantageusement une résine et des pigments réfractaires, la résine étant éliminée lors du traitement de pré-cuisson de l'émail et laissant une couche de pigments, laquelle est ensuite éliminée par lavage et/ou brossage après le traitement de bombage et avant feuilletage.

Le procédé peut comprendre, après l'étape de traitement thermique, une étape de lavage et/ou de brossage. Cette étape permet d'éliminer d'éventuels résidus organiques issus de la combustion de la couche sacrificielle, voire d'éventuels résidus minéraux lorsque la couche sacrificielle en contenait (par exemple des pigments).

Le procédé peut en outre comprendre, après l'étape de traitement thermique, une étape de feuilletage, dans laquelle la feuille de verre est liée à une autre feuille de verre par un intercalaire thermoplastique.

Le matériau obtenu peut être un vitrage pour le bâtiment ou les véhicules de transport, notamment les véhicules automobiles. Dans ce dernier cas, le vitrage est de préférence un toit automobile, un pavillon automobile, une lunette arrière ou un pare-brise de véhicule automobile.

Le toit ou le pavillon automobile comprend de préférence une feuille de verre revêtue d'un émail (notamment noir) disposé à la périphérie de la première face de la feuille de verre, et déposé sur un revêtement électro-conducteur comprenant un oxyde transparent conducteur et disposé sur la totalité de ladite première face. La première face est destinée à être en contact avec l'atmosphère intérieure du véhicule tandis que la face opposée, ou deuxième face, est de préférence liée adhésivement, via un intercalaire thermoplastique à une autre feuille de verre. L'une et/ou l'autre des feuilles de verre et/ou l'intercalaire thermoplastique sont de préférence teintés de sorte que la transmissions lumineuse du vitrage soit d'au plus 40%, notamment 30%. Les feuilles de verre sont de préférence bombées.

La lunette arrière de véhicule automobile comprend de préférence une seule feuille de verre bombée et trempée comprenant, sur la face destinée à être en contact avec l'intérieur du véhicule, comme premier revêtement des pistes de pâtes d'argent comprenant des fils chauffants traversant la feuille de verre et des bandes collectrices situées sur deux côtés opposés de la feuille de verre, les bandes collectrices étant déposées sur un revêtement d'émail (notamment noir) disposé à la périphérie de la feuille de verre. La présence d'émail permet notamment de dissimuler les bandes collectrices depuis l'extérieur du véhicule.

Le pare-brise de véhicule automobile comprend de préférence un vitrage feuilleté bombé comprenant deux feuilles de verre liées adhésivement au moyen d'un intercalaire thermoplastique, un revêtement d'émail (notamment noir) étant disposé à la périphérie d'une des feuilles de verre, notamment en face 2 ou en face 4 du vitrage. Selon la convention en usage, la face 2 est la face intérieure de la feuille de verre destinée à être située à l'extérieur du véhicule, face qui est donc en contact avec l'intercalaire, et la face 4 est la face intérieure de la feuille de verre destinée à être située à l'intérieur du véhicule. L'émail périphérique permet de dissimuler et protéger les joints et adhésifs permettant la fixation du vitrage à la baie de carrosserie ou du rétroviseur intérieur au vitrage. De préférence, le pare-brise comprend au moins un capteur et la bande d'émail périphérique comprend une fenêtre de transmission non émaillée en regard dudit capteur.

### Exemples

Les exemples qui suivent illustrent l'invention de manière non-limitative.

### Exemple 1

Une feuille de verre a été revêtue par sérigraphie, d'abord sur la totalité de sa première face d'un revêtement d'émail noir, puis sur une moitié de ce revêtement d'émail par un revêtement à base de pâte d'argent. La face revêtue de la feuille de verre comprenait donc deux zones, une première zone (revêtue seulement de l'émail) ayant une émissivité plus élevée que celle d'une deuxième zone (revêtue à la fois de l'émail et de la pâte d'argent).

La feuille de verre ainsi revêtue a ensuite été traitée thermiquement en étant placée pendant une durée de 180 secondes dans un four chauffé à une température de 680°C. L'évolution de la température du verre (mesurée sur la face opposée à la première face) dans la première zone (T1) et dans la deuxième zone (T2) a été mesurée.

Dans des essais 1A et 1B, une couche sacrificielle a été déposée sur la totalité de la première et de la deuxième zone. Pour l'essai 1A la couche sacrificielle était une couche d'une résine réticulant sous UV à base d'acrylates, d'une épaisseur d'environ 10 µm tandis que pour l'essai 1B la couche sacrificielle était une couche de peinture comprenant environ 50% en extrait sec d'une résine acrylate epoxy et du noir de carbone, d'une épaisseur après séchage d'environ 5 µm. Dans un essai 1C (comparatif), aucune couche sacrificielle n'a été déposée.

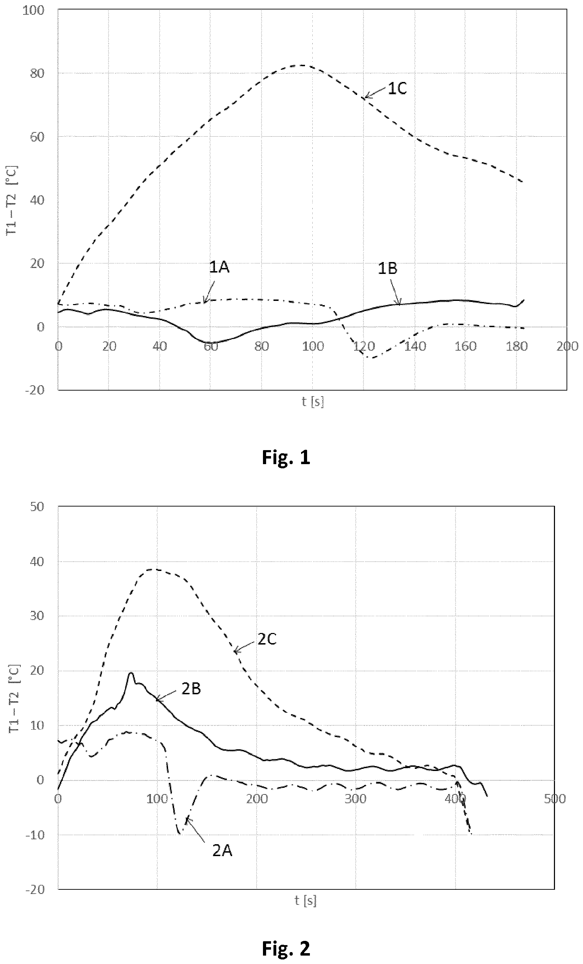

La Figure 1 présente la différence de température T1 - T2 en fonction du temps de chauffe (t, exprimé en secondes).

Les résultats montrent que la couche sacrificielle permet de réduire fortement la différence de températures, qui est au maximum de 10°C en valeur absolue, tandis que cette différence peut aller jusqu'à 80°C en l'absence de couche sacrificielle.

### Exemple 2

Une feuille de verre a été revêtue sur la totalité de sa première face, par pulvérisation cathodique, d'un revêtement bas-émissif à base de TCO, comprenant une couche d'oxyde mixte d'indium et d'étain (ITO) entourée de couches minces d'oxyde et de nitrure de silicium. La moitié de ce revêtement bas-émissif a ensuite été revêtue par sérigraphie d'un revêtement d'émail noir.

La face revêtue de la feuille de verre comprenait donc deux zones, une première zone (revêtue de l'émail) ayant une émissivité plus élevée que celle de la deuxième zone (revêtue seulement par le revêtement bas-émissif).

La feuille de verre ainsi revêtue a ensuite été traitée thermiquement en étant placée pendant une durée de 180 secondes dans un four chauffé à une température de 680°C. L'évolution de la température du verre (mesurée sur la face opposée à la première face) dans la première zone (T1) et dans la deuxième zone (T2) a été mesurée.

Dans des essais 2A et 2B, une couche sacrificielle (respectivement identique à celle utilisée pour les essais 1A et 1B) a été déposée sur la totalité de la première et de la deuxième zone. Dans un essai 2C (comparatif), aucune couche sacrificielle n'a été déposée.

La Figure 2 présente la différence de température T1 - T2 en fonction du temps de chauffe (t, exprimé en secondes).

Les résultats montrent que la couche sacrificielle permet de réduire fortement la différence de températures, qui est au maximum de 20°C en valeur absolue, tandis que cette différence peut aller jusqu'à 40°C en l'absence de couche sacrificielle.

### Exemple 3

Une feuille de verre a été revêtue par sérigraphie, d'abord sur la totalité de sa première face d'un revêtement d'émail noir, puis sur une moitié de ce revêtement d'émail par un revêtement à base de pâte d'argent. La face revêtue de la feuille de verre comprenait donc deux zones, une première zone (revêtue seulement de l'émail) ayant une émissivité plus élevée que celle d'une deuxième zone (revêtue à la fois de l'émail et de la pâte d'argent).

La feuille de verre ainsi revêtue a ensuite été traitée thermiquement en étant placée pendant une durée de 180 secondes dans un four chauffé à une température de 710°C. L'évolution de la température du verre (mesurée sur la face opposée à la première face) dans la première zone (T1) et dans la deuxième zone (T2) a été mesurée.

Dans un essai 3A, une couche sacrificielle a été déposée par sérigraphie sur la deuxième zone.

La composition sérigraphiée était constituée d'un médium organique et de pigments minéraux noirs à base d'oxydes de cuivre (37% en masse), de fer (17% en masse) et de manganèse (46% en masse). L'épaisseur humide était de 15 µm. Dans cet exemple, le traitement thermique a permis d'éliminer la couche sacrificielle par combustion de la résine, laissant les pigments à la surface du verre.

Dans un essai 3B (comparatif), aucune couche sacrificielle n'a été déposée.

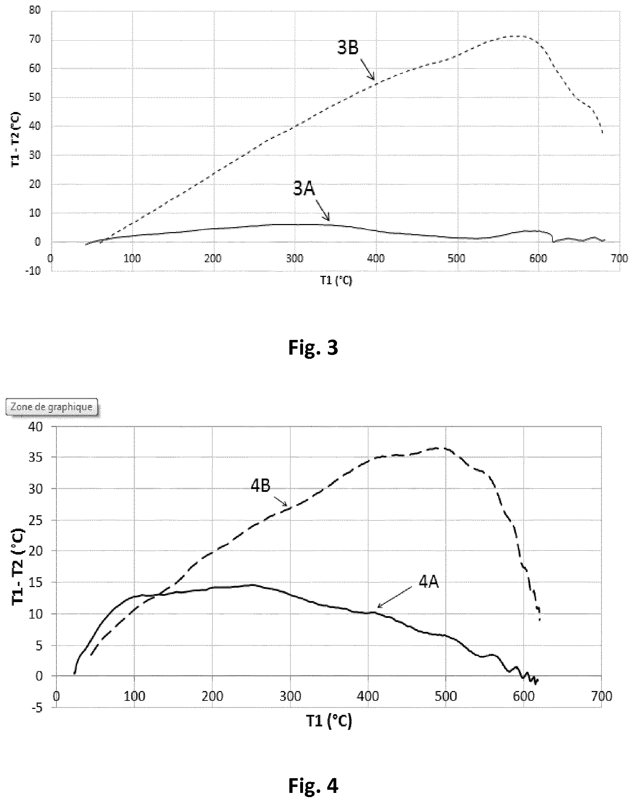

La Figure 3 présente la différence de température T1 - T2 en fonction de la température T1.

Les résultats montrent que la couche sacrificielle permet de réduire fortement la différence de températures, qui est au maximum de 6°C en valeur absolue dans le cas de l'exemple 3A, tandis que cette différence peut aller jusqu'à plus de 70°C en l'absence de couche sacrificielle.

### Exemple 4

Une feuille de verre a été revêtue par sérigraphie, sur une partie de sa première face d'un revêtement d'émail noir. La face revêtue de la feuille de verre comprenait donc deux zones, une première zone (revêtue de l'émail) ayant une émissivité plus élevée que celle d'une deuxième zone (non-revêtue, donc de verre nu).

On a ensuite disposé sur la feuille de verre ainsi revêtue une autre feuille de verre clair non-revêtue, afin de simuler les conditions de bombage en vue de la fabrication d'un pare-brise feuilleté. L'ensemble a ensuite été traité thermiquement en étant placé pendant une durée de 180 secondes dans un four chauffé à une température de 710°C. L'évolution de la température du verre dans la première zone (T1) et dans la deuxième zone (T2) a été mesurée à l'aide de thermocouples placés entre les deux feuilles de verre.

Dans l'essai 4A la zone non revêtue par l'émail (deuxième zone) a été préalablement revêtue par sérigraphie d'une composition constituée d'un médium organique et de pigments noirs, la composition étant identique à celle utilisée dans le cadre de l'exemple 3.

Dans l'essai 4B (comparatif), aucune couche sacrificielle n'a été déposée.

La Figure 4 présente la différence de température T1 - T2 en fonction de T1.

Les résultats montrent que la couche sacrificielle permet de réduire fortement la différence de températures à haute température, puisqu'elle est au maximum de 15°C en valeur absolue dans le cas de l'exemple 4A, tandis que cette différence peut aller jusqu'à plus de 35°C en l'absence de couche sacrificielle. Lorsque la température de l'émail atteint 500°C, la différence de température est inférieure à 5°C dans le cas de l'exemple 4A contre 35°C pour l'exemple comparatif 4B.

### Exemple 5

Dans un essai comparatif 5A on a déposé par sérigraphie sur une première feuille de verre de 2,1 mm d'épaisseur une couche d'émail noir (épaisseur humide d'environ 20 pm) ayant en son centre une zone caméra de 150*130mm², non revêtue. Après séchage à 150°C pendant 2 minutes, l'émail a été précuit à 600°C pendant 115 secondes, puis la première feuille de verre a été appariée avec une deuxième feuille de verre de 2,1 mm d'épaisseur de sorte que la face émaillée se trouve du côté de la deuxième feuille de verre, les deux feuilles de verre étant maintenues à distance en disposant entre elles une poudre intercalaire assurant un espace de quelques dizaines de micromètres, typiquement de 20 à 50 µm. L'ensemble a ensuite subi un traitement de bombage à 610°C pendant 340 secondes, puis les deux feuilles de verre ont été séparées, lavées afin d'éliminer la poudre intercalaire, et enfin feuilletées au moyen d'une feuille de polyvinylbutyral (PVB). Dans le vitrage feuilleté obtenu, la couche d'émail se trouvait donc en face 2.

Dans l'essai selon l'invention 5B, une couche sacrificielle a été déposée à la fois sur la couche d'émail noir et sur la zone caméra, avant le traitement de pré-cuisson. Pour ce faire, une composition constituée d'un médium organique et de pigments noirs, identique à celle utilisée dans les exemples 3 et 4, a été déposée par sérigraphie après séchage de l'émail noir. La couche, d'épaisseur humide de l'ordre de 6 à 8 µm, a été séchée à 150°C pendant 2 minutes. Le traitement de pré-cuisson permet d'éliminer la couche sacrificielle par combustion du médium organique, laissant sur la feuille de verre une couche de pigments noirs.

La distorsion optique au niveau de la zone caméra a ensuite été mesurée à l'aide d'un appareil Labscan commercialisé par la société ISRA Vision avec un filtrage 1/2/0. La distorsion maximale horizontale dans la zone caméra mesurée était de 584 milli-dioptries dans le cas de l'exemple comparatif 5A et de 160 milli-dioptries dans le cas de l'exemple 5B.

La présence d'une couche sacrificielle pendant la pré-cuisson et le bombage a donc permis de diminuer sensiblement la distorsion dans la zone caméra.

## Revendications

1. Procédé d'obtention d'un matériau comprenant une feuille de verre, ledit procédé comprenant la fourniture d'une feuille de verre comprenant une première face revêtue au moins en partie par un premier revêtement essentiellement minéral, ladite première face possédant au moins une première zone et au moins une deuxième zone, ladite au moins une première zone ayant une émissivité plus élevée que celle de ladite deuxième zone, ledit procédé étant **caractérisé en ce qu'**il comprend en outre les étapes suivantes :
- l'application, sur au moins une partie de ladite deuxième zone, d'une couche sacrificielle comprenant une résine, puis
- le traitement thermique de ladite feuille de verre revêtue à une température d'au moins 550°C, étape au cours de laquelle ladite couche sacrificielle est éliminée par combustion.

2. Procédé selon la revendication précédente, tel que le premier revêtement est électro-conducteur.

3. Procédé selon la revendication précédente, tel que le premier revêtement comprend au moins un métal, notamment de l'argent, ou comprend au moins un oxyde transparent conducteur.

4. Procédé selon l'une des revendications précédentes, dans lequel la première face est revêtue sur au moins une partie par un deuxième revêtement essentiellement minéral.

5. Procédé selon la revendication précédente, tel que le deuxième revêtement est un émail contenant des pigments, notamment des pigments noirs.

6. Procédé selon l'une des revendications 4 ou 5, tel que l'un parmi les premier et deuxième revêtements recouvre partiellement l'autre.

7. Procédé selon la revendication précédente, dans lequel le premier revêtement est électro-conducteur et recouvre une partie du deuxième revêtement qui est un émail contenant des pigments.

8. Procédé selon la revendication précédente, tel que le premier revêtement comprend des pistes de pâte d'argent.

9. Procédé selon la revendication 6, dans lequel le deuxième revêtement est un émail contenant des pigments et recouvre partiellement le premier revêtement qui est électro-conducteur.

10. Procédé selon la revendication 1, tel que le premier revêtement est un émail contenant des pigments, notamment des pigments noirs.

11. Procédé selon l'une des revendications précédentes, tel que la couche sacrificielle est constituée de résine et de composés minéraux réfractaires ou combustibles, notamment des pigments.

12. Procédé selon l'une des revendications précédentes, tel que le traitement thermique est un traitement de bombage et/ou de trempe de la feuille de verre.

13. Procédé selon l'une des revendications 5 ou 7 à 10, tel que le traitement thermique est un traitement de pré-cuisson de l'émail.

14. Procédé selon la revendication précédente, dans lequel le traitement de pré-cuisson de l'émail est suivi d'un traitement de bombage de la feuille de verre.

15. Procédé selon l'une des revendications précédentes, comprenant en outre après l'étape de traitement thermique une étape de feuilletage, dans laquelle la feuille de verre est liée à une autre feuille de verre par un intercalaire thermoplastique.

## Patentansprüche

1. Verfahren zum Erhalten eines Materials, umfassend eine Glasscheibe, das Verfahren umfassend das Bereitstellen einer Glasscheibe, umfassend eine erste Seite, die mindestens zum Teil durch eine erste im Wesentlichen mineralische Beschichtung beschichtet ist, wobei die erste Seite mindestens eine erste Zone und mindestens eine zweite Zone besitzt, wobei die mindestens eine erste Zone ein höheres Emissionsvermögen als das der zweiten Zone aufweist, wobei das Verfahren **dadurch gekennzeichnet ist, dass** es ferner die folgenden Schritte umfasst:
- Auftragen, auf mindestens einen Teil der zweiten Zone, einer Opferschicht, umfassend ein Harz, anschließend
- Wärmebehandeln der beschichteten Glasscheibe bei einer Temperatur von mindestens 550 °C, wobei im Laufe des Schritts die Opferschicht durch Verbrennung entfernt wird.

2. Verfahren nach dem vorstehenden Anspruch, wobei die erste Beschichtung elektrisch leitfähig ist.

3. Verfahren nach dem vorstehenden Anspruch, wobei die erste Beschichtung mindestens ein Metall, insbesondere Silber, umfasst oder mindestens ein transparentes leitfähiges Oxid umfasst.

4. Verfahren nach einem der vorstehenden Ansprüche, wobei die erste Seite auf mindestens einem Teil durch eine zweite im Wesentlichen mineralische Beschichtung beschichtet ist.

5. Verfahren nach dem vorstehenden Anspruch, wobei die zweite Beschichtung eine Emaille ist, die Pigmente, insbesondere schwarze Pigmente, enthält.

6. Verfahren nach einem der Ansprüche 4 oder 5, wobei eine unter der ersten und der zweiten Beschichtung die andere teilweise bedeckt.

7. Verfahren nach dem vorstehenden Anspruch, wobei die erste Beschichtung elektrisch leitfähig ist und einen Teil der zweiten Beschichtung, die eine Emaille ist, die Pigmente enthält, bedeckt.

8. Verfahren nach dem vorstehenden Anspruch, wobei die erste Beschichtung Spuren von Silberpaste umfasst.

9. Verfahren nach Anspruch 6, wobei die zweite Beschichtung eine Emaille ist, die Pigmente enthält, und die erste Beschichtung, die elektrisch leitfähig ist, teilweise bedeckt.

10. Verfahren nach Anspruch 1, wobei die erste Beschichtung eine Emaille ist, die Pigmente, insbesondere schwarze Pigmente, enthält.

11. Verfahren nach einem der vorstehenden Ansprüche, wobei die Opferschicht aus Harz und aus mineralischen refraktären oder verbrennbaren Verbindungen, insbesondere Pigmenten, besteht.

12. Verfahren nach einem der vorstehenden Ansprüche, wobei die Wärmebehandlung eine Biege- und/oder Abschreckbehandlung der Glasscheibe ist.

13. Verfahren nach einem der Ansprüche 5 oder 7 bis 10, wobei die Wärmebehandlung eine Voreinbrennbehandlung der Emaille ist.

14. Verfahren nach dem vorstehenden Anspruch, wobei die Voreinbrennbehandlung der Emaille von einer Biegebehandlung der Glasscheibe gefolgt wird.

15. Verfahren nach einem der vorstehenden Ansprüche, umfassend ferner nach dem Wärmebehandlungsschritt, einen Laminierungsschritt, in dem die Glasscheibe durch eine thermoplastische Zwischenlage mit einer anderen Glasscheibe verbunden wird.

## Claims

1. A process for obtaining a material comprising a glass sheet, said process comprising providing a glass sheet comprising a first face coated at least partly by an essentially mineral first coating, said first face having at least one first zone and at least one second zone, said at least one first zone having a higher emissivity than that of said second zone, said process being **characterized in that** it further comprises the following steps:
- applying, on at least one portion of said second zone, a sacrificial layer comprising a resin, then
- heat treating said coated glass sheet at a temperature of at least 550°C, during which step said sacrificial layer is removed by combustion.

2. The process as claimed in the preceding claim, such that the first coating is electrically conductive.

3. The process as claimed in the preceding claim, such that the first coating comprises at least one metal, in particular silver, or comprises at least one transparent conductive oxide.

4. The process as claimed in one of the preceding claims, wherein the first face is coated over at least one portion by an essentially mineral second coating.

5. The process as claimed in the preceding claim, such that the second coating is an enamel containing pigments, in particular black pigments.

6. The process as claimed in either of claims 4 and 5, such that one of the first and second coatings partially covers the other.

7. The process as claimed in the preceding claim, wherein the first coating is electrically conductive and covers a portion of the second coating which is an enamel containing pigments.

8. The process as claimed in the preceding claim, such that the first coating comprises silver paste tracks.

9. The process as claimed in claim 6, wherein the second coating is an enamel containing pigments and partially covers the first coating which is electrically conductive.

10. The process as claimed in claim 1, such that the first coating is an enamel containing pigments, in particular black pigments.

11. The process as claimed in one of the preceding claims, such that the sacrificial layer consists of resin and of refractory or combustible mineral compounds, in particular pigments.

12. The process as claimed in one of the preceding claims, such that the heat treatment is a treatment for bending and/or tempering the glass sheet.

13. The process as claimed in one of claims 5 or 7 to 10, such that the heat treatment is a treatment for pre-firing the enamel.

14. The process as claimed in the preceding claim, wherein the treatment for pre-firing the enamel is followed by a treatment for bending the glass sheet.

15. The process as claimed in one of the preceding claims, further comprising, after the heat treatment step, a lamination step, wherein the glass sheet is bonded to another glass sheet by a thermoplastic interlayer.
